# EUROPÄISCHE PATENTSCHRIFT

(11) **EP 2 510 261 B1**
(45) Veröffentlichungstag und Bekanntmachung des Hinweises auf die Patenterteilung: **23.03.2016**
(21) Anmeldenummer: 10784983.8
(22) Anmeldetag: 19.11.2010
(51) Int. Cl.: F16H 61/4035, F16H 61/4157, F16H 61/4096

(54) **HYDROSTATISCHER ANTRIEB**
HYDROSTATIC DRIVE
ENTRAÎNEMENT HYDROSTATIQUE

(30) Priorität: 11.12.2009 DE 102009058005
(43) Veröffentlichungstag der Anmeldung: 17.10.2012
(73) Patentinhaber: Hydac Filter Systems GmbH, 66280 Sulzbach/Saar (DE)
(72) Erfinder: HONSBEIN, Rüdiger, 66822 Lebach-Dörsdorf (DE)
(74) Vertreter: Bartels, Martin Erich Arthur
(86) Internationale Anmeldenummer: PCT/EP2010/007041
(87) Internationale Veröffentlichungsnummer: WO 2011/069597

(56) Entgegenhaltungen:
- DE-A1-102005 061 991
- DE-A1-102007 027 600
- DE-A1-102008 057 897

## Beschreibung

Die Erfindung betrifft einen hydrostatischen Antrieb mit einer geschlossenen Kreislaufführung, welcher eine verstellbare, von einer Verbrennungskraftmaschine angetriebene Hydropumpe und einen Hydromotor aufweist, sowie eine erste Arbeitsleitung und eine zweite Arbeitsleitung, wobei die erste und die zweite Arbeitsleitung jeweils die Hydropumpe und den Hydromotor fluidführend miteinander verbinden.

Hydrostatische Antriebe, wie sie beispielsweise in mobilen Arbeitsmaschinen Verwendung finden, bestehen häufig aus einer geschlossenen Kreislaufführung, welche aus einer Hydropumpe, einem Hydromotor und zwei sie jeweils verbindenden Arbeitsleitungen gebildet ist. Die beiden Arbeitsleitungen befördern Druckmittel oder Fluide in jeweils entgegengesetzte Richtungen. Die Hydropumpe wird dabei über ein Antriebswelle durch eine Verbrennungskraftmaschine angetrieben. Die Verbrennungskraftmaschine ist häufig als Dieselmotor konzipiert.

In bestimmten Fahrsituationen, insbesondere im sogenannten Schiebebetrieb eines Nutzfahrzeuges oder einer entsprechend mit einem derartigen hydrostatischen Antrieb ausgestatteten Arbeitsmaschine, kommt es vor, dass der Hydromotor Druckmittel durch den geschlossenen Kreislauf fördert und die Hydropumpe mit Druck beaufschlagt wird. Die Hydropumpe arbeitet dann als Hydromotor und stützt sich dann an der Arbeitsmaschine ab. Es besteht bei diesem Betriebszustand der Arbeitsmaschine auch die Gefahr, dass die entsprechende Drehzahl des Fahrmotors oder der Verbrennungskraftmaschine verfügbare Bremslast überschritten wird. Ist dies der Fall, so erhöht sich die Drehzahl der Verbrennungskraftmaschine und es sind dann geeignete Maßnahmen zu treffen, um eine die Verbrennungskraftmaschine schädigende Überlast durch Überdrehen zu verhindern.

Aus der DE 102 41 950 A1 ist es bekannt, in der stromabwärts des Hydromotors angeordneten Arbeitsleitung ein Drosselventil vorzusehen. Mit Hilfe dieses Ventils ist eine Drosselung des Volumenstroms in der Arbeitsleitung realisierbar. Das Drosselventil wird hierzu durch einen Stellkolben hinsichtlich seiner Position beeinflusst. Die Position des Stellkolbens ist wiederum von dem stromabwärts des Drosselventils angeordneten Arbeitsleitungsdruck sowie einem von der Drehzahl des Antriebsmotors vorgebbaren Druck abhängig. Dadurch, dass das gesamte Fördervolumen durch die Drosselstele gefördert werden muss, ergeben sich erhebliche Temperaturanstiege für das Druckmittel. Die Steuerung des Drosselventils ist zudem aufwändig.

Aus der JP 2002-013636 A ist ein hydrostatischer Antrieb bekannt, bei dem eine verstellbare Pumpe in einer geschlossenen Kreislaufführung mit einem Konstantmotor als Hydromotor verbunden ist. Die beiden Arbeitsleitungen, die die Hydropumpe mit dem Hydromotor verbinden, sind über ein Schaltventil gedrosselt miteinander verbindbar. Um das Schaltventil in seine verbindende Position zu bringen, ist diese mit einem Speisedruck einer Speisedruckpumpe zu beaufschlagen. Die Verbindung und damit das gedrosselte Kurzschließen der beiden Arbeitsräume erfolgt somit lediglich in Abhängigkeit von einem durch die Speisepumpe erzeugten Speisedruck. Dies hat den Nachteil, dass eine Beaufschlagung des Schaltventils nicht von der Drehzahl einer mit der Speisepumpe verbundenen Antriebsmaschine abhängt. Der durch die Speisepumpe erzeugte Druck kann somit kein Maß für das Überschreiten einer für die Antriebsmaschine kritischen Drehzahl darstellen.

Es sind in der Praxis auch hydrostatische Antriebe bekannt, in deren Arbeitsleitungen sich Schaltungen befinden, bestehend aus Ventileinheiten, mit einem Entnahmeventil, einem Differenzdruckventil sowie Rückschlagventilen, die unter Leistungsverlusten Druckmittel, welches zu einer Überdrehung der Antriebsmaschine bei entsprechendem Schiebebetrieb führen könnten, in einen Druckmittelbehälter ableiten. Zudem können solche Schaltungen auch eine Stellvorrichtung für den Hydromotor ansteuern und dessen Verdrängungsvolumen verändern.

Ein hydrostatischer Antrieb gemäß dem Oberbegriff des Anspruchs 1 ist aus DE 102005061991 bekannt.

Die bekannten hydrostatischen Antriebe und deren Steuerungen sind regelmäßig nicht in der Lage, eine maximal mögliche Bremsleistung zu erzielen bzw. eine Energierückführung in ein hydraulisches Gesamtsystem, dessen Teil der hydrostatische Antrieb ist, zu bewirken.

Im Hinblick auf diesen Stand der Technik liegt der Erfindung die Aufgabe zugrunde, einen hydrostatischen Antrieb zu schaffen, der auf einfache Weise eine maximale Bremsleistung bei hoher Ausnutzung der rückgeführten Energie innerhalb eines hydraulischen Gesamtsystems ermöglicht.

Erfindungsgemäß ist diese Aufgabe durch einen hydrostatischen Antrieb mit den Merkmalen des Patentanspruches 1 in seiner Gesamtheit gelöst.

Bei dem erfindungsgemäßen hydrostatischen Antrieb mit einer verstellbaren, von einer Verbrennungskraftmaschine angetriebenen Hydropumpe und einem Hydromotor, die mit einer ersten Arbeitsleitung und mit einer zweiten Arbeitsleitung miteinander verbunden sind, ist zum Schutz vor einem Überdrehen der Verbrennungskraftmaschine beim Schiebebetrieb jeweils ein Ventil als Schaltventil oder Proportionalventil in die erste und zweite Arbeitsleitung eingebracht und durch den Fluiddruck in den Arbeitsleitungen vorgesteuert. Ein erstes Ventil in der ersten Arbeitsleitung ist dabei durch den Druck in der ersten Arbeitsleitung vorgesteuert und sorgt für eine adaptive Ableitung von Druckmittel bei einem Übersteigen eines vorgebbaren Druckniveaus im Schiebebetrieb, d. h. bei Druckvertauschung in der ersten Arbeitsleitung. Somit wird die Strömungsrichtung beibehalten; ansonsten käme es zur Drehrichtungsumkehr am Motor. Das Druckmittel wird an einen Verbraucher weitergeleitet und derart eine Energierückgewinnung ermöglicht. Das zweite Ventil in der zweiten Arbeitsleitung kann in gleicher Weise eingesetzt sein, um bei inversen Strömungsrichtungsverhältnissen überschüssiges Druckmittel an zumindest einen Verbraucher abzuführen und hernach einem Druckmittelbehälter zuzuführen.

Mit der erfindungsgemäßen Lösung erfolgt die hydraulische Vorsteuerung des Ventils durch ein, den Fluiddruck in der ersten Arbeitsleitung erfassendes Druckregelventil und in Abhängigkeit des Fluiddruckes in der ersten Arbeitsleitung und in der zweiten Arbeitsleitung. Die hydraulische Vorsteuerung ist somit auch unabhängig oder in Abhängigkeit der Kennlinie der Verbrennungskraftmaschine einstellbar und steht als elektrisches Signal zur Verfügung oder ist vordefiniert fest eingestellt.

Es kann in vorteilhafter Weise auch vorgesehen sein, verschiedene Betriebsweisen in Bezug auf die Vorsteuerung der Ventile dahingehend vorzusehen, dass der Vorsteuerdruck der Ventile in der ersten und zweiten Arbeitsleitung von einem Druckregelventil bestimmt ist. Damit wird der Druckmittelstrom durch die Hydropumpe derart verringert, dass eine unzulässige Erhöhung der Drehzahl der Verbrennungskraftmaschine verhindert ist. Die Vorsteuerung der Ventile zur Ableitung von Druckmittel zu dem Verbraucher erlaubt zudem eine Anpassung des abgeleiteten Druckmittelstromes an die jeweiligen Kennlinie des Verbrauchers. Der Verbraucher kann beispielsweise ein Kühlgebläse sein.

Die Ventile sind zweckmäßig von einer Bypassleitung überbrückt, die beim Schiebebetrieb, also bei Druckvertauschung, von dem Hydromotor zu der Hydropumpe durch ein Rückschlagventil gesperrt sind, und im übrigen Lastbetrieb mit einer Strömungsrichtung des Druckmittels von der Hydropumpe zum Hydromotor öffnen, so dass die Ventile bei dieser Betriebsart auch in einer geschlossenen Schaltstellung betrieben werden können, in der sie unter Umständen keine Energie benötigen. Über die dargestellte Ventilsteuerung lässt sich der Verbraucher durch Druckmittel aus der ersten Arbeitsleitung und aus der zweiten Arbeitsleitung speisen.

Die Ventile können in einem besonders bevorzugten Ausführungsbeispiel so vorgesteuert oder verschaltet sein, dass das Ventil in der ersten Arbeitsleitung die im üblichen Lastbetrieb die Rücklaufleitung für Fluid von dem Hydromotor zu der Hydropumpe bildet, in einer teilweise oder ganz gesperrten Schaltstellung ist, in der Druckmittel zu dem Verbraucher abgeleitet wird, und zwar über das geöffnete Rückschlagventil in der Bypassleitung, die jedes Ventil überbrückt. Bei dieser Schiebebetriebsweise des hydrostatischen Antriebs ist das zweite Ventil in der zweiten Arbeitsleitung geöffnet und ermöglicht einen Transport von Fluid von der Hydropumpe zu dem Hydromotor. Druckmittel kann so von der jeweiligen Bypassleitung oder Überbrückungsleitung eines jeden Ventils abgeleitet werden, und zwar in Abhängigkeit von der in den Arbeitsleitungen herrschenden Druckvertauschung. Es empfiehlt sich dabei eine Differenzdruckregelung der vorgesteuerten Ventile nach Maßgabe der in den jeweiligen Arbeitsleitungen herrschenden Drücke.

In eine Versorgungsleitung zu dem Verbraucher ist bevorzugt ein Druckbegrenzungsventil und ein Stromventil eingebunden. Das Stromventil ist bevorzugt als 3-Wege-Stromregelventil ausgebildet, so dass insgesamt ein dem Betriebsverhalten des jeweiligen Verbrauchers angepasster Fluidstrom darstellbar ist. Das 3-Wege-Stromregelventil kann den Fluidstrom zu dem Verbraucher und einem weiteren Verbraucher, etwa einem Druckmittelkühler oder Druckmittelspeicher, aufteilen.

Es kann zur Energierückgewinnung im Schiebebetrieb des Hydromotors auch zweckmäßig sein, durch Druckmittel, das von den Ventilen oder von den Bypassleitungen um die Ventile herum geführt wird, einen Druckmittelspeicher aufzuladen. Zu diesem Zweck kann es vorteilhaft sein, den Druckmittelspeicher mit beiden Bypassabgängen an den jeweiligen Ventilen fluidführend über ein 3/3-Wegeventil zu verbinden. Das 3/3-Wegeventil, welches bevorzugt in einer federzentrierten Position sperrt, kann von Signalen eines in die zweite oder erste Arbeitsleitung eingebrachten Flussrichtungsindikators vorgesteuert sein. Somit kann der Druckmittelspeicher in Abhängigkeit von den detektierten Strömungsrichtung in der ersten und zweiten Arbeitsleitung wahlweise Druckmittel in die erste Arbeitsleitung oder die zweite Arbeitsleitung speisen.

Der Druckmittelspeicher lässt sich gleichwohl mit der Versorgungsleitung für den ersten Verbraucher verbinden und über ein geeignetes Schaltventil in der Versorgungsleitung mit Druckmittel aufladen. Das Schaltventil kann vorgesteuert sein, etwa durch einen Differenzdruck zwischen dem ersten Druckbegrenzungsventil und einem diesem nachgelagerten zweiten Druckbegrenzungsventil in der Versorgungsleitung. Einen besonders einfachen Schutz vor Überdrehen der Verbrennungskraftmaschine lässt sich dadurch erreichen, dass die Ventile als 2/2-Wegeventile ausgebildet sind.

Nachstehend ist die Erfindung anhand der Zeichnung im Einzelnen erläutert. Es zeigen:
- Fig. 1: einen schematischen Schaltplan eines erfindungsgemäßen hydrostatischen Antriebs, mit einem in einer Strömungsrichtung des Fluids von dem Hydromotor zu der Hydropumpe wirkenden Überdrehzahlschutz in einer Arbeitsleitung;
- Fig. 2: einen schematischen Schaltplan eines erfindungsgemäßen hydrostatischen Antriebes, mit einem in beide Strömungsrichtungen des Fluids von dem Hydromotor zu der Hydropumpe wirkenden Überdrehzahlschutz in beiden Arbeitsleitungen;
- Fig. 3: einen schematischen Schaltplan eines erfindungsgemäßen hydrostatischen Antriebs, mit einem in beiden Strömungsrichtungen des Fluids wirkenden Überdrehzahlschutz in beiden Arbeitsleitungen des hydrostatischen Antriebs im Lastbetrieb;
- Fig. 4: einen schematischen Schaltplan eines erfindungsgemäßen hydrostatischen Antriebs, mit einem in den beiden Strömungsrichtungen des Fluids wirkenden Überdrehzahlschutz im Brems- oder Schiebebetrieb;
- Fig. 5: einen schematischen Schaltplan eines erfindungsgemäßen hydrostatischen Antriebs, mit einem in eine Strömungsrichtung des Fluids von dem Hydromotor zu der Hydropumpe wirkenden Überdrehzahlschutz mit Rückspeisung des Fluids in einen Druckmittelspeicher;
- Fig. 6: einen schematischen Schaltplan eines erfindungsgemäßen hydrostatischen Antriebs, mit einem in beiden Strömungsrichtungen des Fluids wirkenden Überdrehzahlschutz mit Rückspeisung des Fluids in einen Druckmittelspeicher;
- Fig. 7: der hydrostatische Antrieb nach der Fig. 6 im Lastbetrieb; und möglicher energetischer Rückspeisung aus einem Druckmittelspeicher;
- Fig. 8: der hydrostatische Antrieb nach der Fig. 6 in einem Brems- oder Schiebebetrieb mit Ausspeisung des Fluids in einen Druckmittelspeicher.

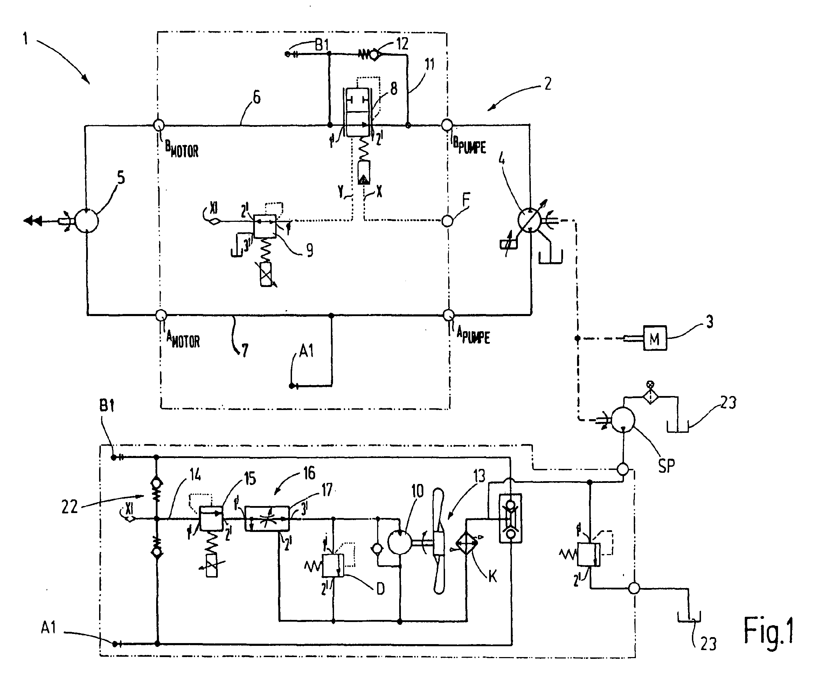

In der Fig. 1 ist ein erstes Ausführungsbeispiel des erfindungsgemäßen hydrostatischen Antriebs gezeigt. Der hydrostatische Antrieb 1 weist eine Verbrennungskraftmaschine 3 auf, die als Dieselbrennkraftmaschine ausgebildet ist. Die Verbrennungskraftmaschine 3 treibt ein in ihrem Fördervolumen einstellbare und variierbare Hydropumpe 4 an. Die Hydropumpe 4 kann beispielsweise eine Radialkolbenpumpe oder eine Flügelzellenpumpe oder eine in zwei Richtungen verschwenkbare hydrostatische Axialkolbenmaschine sein. Die Hydropumpe 4 kann entweder in eine erste Arbeitsleitung 6 oder in eine zweite Arbeitsleitung 7 Fluid unter Druck fördern. Das von der Hydropumpe 4 geförderte Fluid treibt einen Hydromotor 5 an, der über eine Abtriebswelle ein nicht gezeigtes Fahrzeug antreibt. Im üblichen Fahrbetrieb unter Last bildet die erste Arbeitsleitung 6 eine Rücklaufleitung, die zweite Arbeitsleitung 7 eine Förderleitung für Fluid zu dem Hydromotor 5. Insgesamt ist so ein geschlossener Kreislauf 2 gebildet. Das Fluid wird von dem Anschluss A_{Pumpe} der Hydropumpe 4 zu dem Anschluss A_{Motor} des Hydromotors 5 gefördert und von dem Anschluss B_{Motor} des Hydromotors 5 zu dem Anschluss B_{Pumpe} der Hydropumpe 4 rückgeführt.

In die erste Arbeitsleitung 6 ist ein als 2/2-Wegeventil mit direkter hydraulischer Ansteuerung gebildetes erstes Ventil 8 eingeschaltet. Das Ventil 8 ist von einer ersten Bypassleitung 11 umgangen. In die Bypassleitung 11 ist ein Rückschlagventil 12 eingebaut, das in der dargelegten Strömungsrichtung des Fluids sperrend wirkt. An die Bypassleitung 12 ist ein Abzweig B1 für einen weiteren hydrostatischen Kreislauf, der in der unteren Hälfte der Fig. 1 dargestellt ist, vorhanden. Die zweite Arbeitsleitung 7 weist ebenfalls einen Abzweig A1 für Fluid zu diesem weiteren hydraulischen Kreislauf auf.

Das Ventil 8 wird von einem Druckregelventil 9 angesteuert und ist in Fig. 1 in seiner geöffneten Schaltstellung gezeigt. Das Druckregelventil 9 regelt somit den Druckmitteldruck in der ersten Arbeitsleitung 6, die die Rücklaufleitung zu der Hydropumpe 4 darstellt. Beim Auftreten kritischer Drücke in der ersten Arbeitsleitung 6, etwa im Schiebebetrieb, wenn der Fahrmotor oder der Hydromotor 5 ohne Last betrieben sind, und viel mehr Druckmittel oder Druck über die erste Arbeitsleitung 6 zu der Hydropumpe 4 gefördert wird, wird das Ventil 8 zumindest in eine teilweise geschlossene Schaltstellung verbracht. Dadurch wird verhindert, dass die Hydropumpe 4, insbesondere die Verbrennungskraftmaschine 3 eine Überdrehzahl oder ein Überdrehen erfährt.

Der Druckmittelstrom in der ersten Arbeitsleitung 6 wird teilweise dann von dem Abzweig B1 und dem Abzweig A1 in den weiteren hydraulischen Kreislauf gefördert, und zwar zu einem Verbraucher 10. Der Verbraucher 10 ist in den in den Fig. 1 bis 8 gezeigten Ausführungsbeispielen ein Kühlgebläse 13 für das Rückführöl, z.B. für die Verbrennungskraftmaschine 3, oder zur Eigenkühlung.

Eine Versorgungsleitung 14 für den Verbraucher 10 ist mit einem Wechselventil 22 an die beiden Abzweige A1, B1 angeschlossen. Dem Wechselventil 22 nachgeschaltet ist ein erstes Druckbegrenzungsventil 15 und diesem wiederum ein Stromventil 16 nachgelagert. Das Stromventil 16 ist als 3-Wege-Stromregler 17 ausgebildet und vermag den Fluidstrom zu dem Verbraucher 10 in Teilströme aufgeteilt zu dem Verbraucher 10 oder zu einem Kühler K zu lenken, wobei ein weiteres Druckregelventil D eine fluidführende Verbindung von der Versorgungsleitung 14 zu dem Kühlgebläse 13 und zu dem Kühler K im Stande ist zu überbrücken. Der von dem 3-Wege-Stromregler 17 aufgeteilte Fluidstrom wird stromab des Kühlgebläses 13 und stromauf des Kühlers K wiederum zusammengefasst und gekühlt einer Druckniederseite 23 zugeführt. Das Fluid kann hernach wieder von einer Speisepumpe SP zu der Hydropumpe 4 gefördert werden.

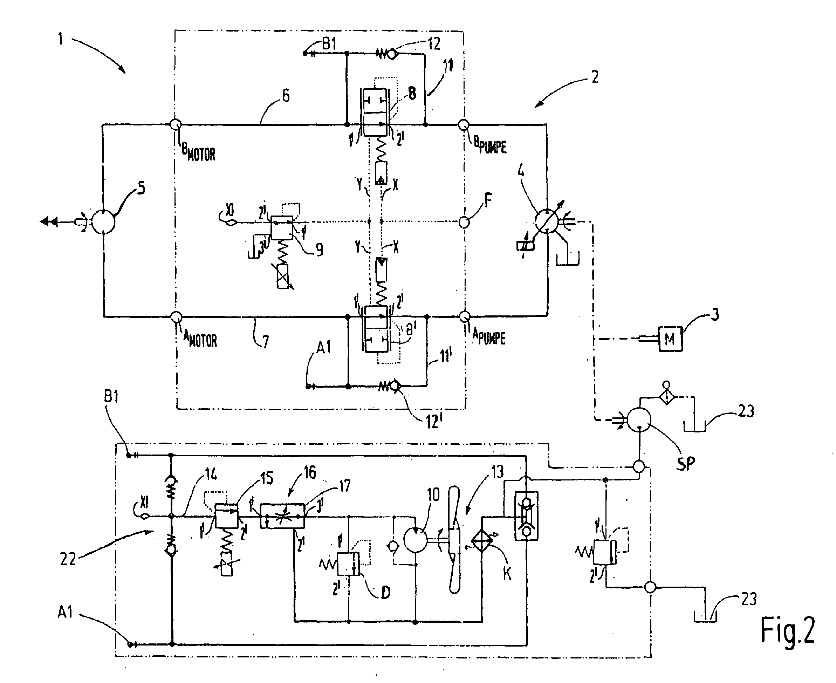

In der Fig. 2 ist ein weiteres Ausführungsbeispiel eines hydrostatischen Antriebs 1 gezeigt, bei dem zusätzlich in die zweite Arbeitsleitung 7 ein zweites Ventil 8' eingeschaltet ist. Das Ventil 8' ist als 2/2-Wegeventil mit derselben Ansteuerungsart, wie das in Fig. 1 gezeigte Ventil 8, angesteuert, und zwar über das Druckregelventil 9.

Das zweite Ventil 8' ist ebenso von einer Bypassleitung 11' umgegangen, die in die zweite Arbeitsleitung 7 geschaltet ist. Ein Rückschlagventil 12' ist in der Bypassleitung 11' derart angeordnet, dass es im normalen Lastbetrieb in geöffneter Position ist. Beide Ventile 8, 8' lassen sich über einen Fernsteueranschluss F direkt und im Sinne einer Übersteuerung des Druckregelventils 9 betätigen. Wird F mit Druck beaufschlagt, so ist die gesamte Schutzschaltung außer Kraft gesetzt worden (Maschine stirbt mit der Last). Im übrigen gelten für die gleichen Bauteile dieselben Bezugszeichen wie in der Fig. 1 aufgezeigt und die insoweit bisher getroffenen Erläuterungen gelten auch für die nachfolgenden Ausführungsbeispiele.

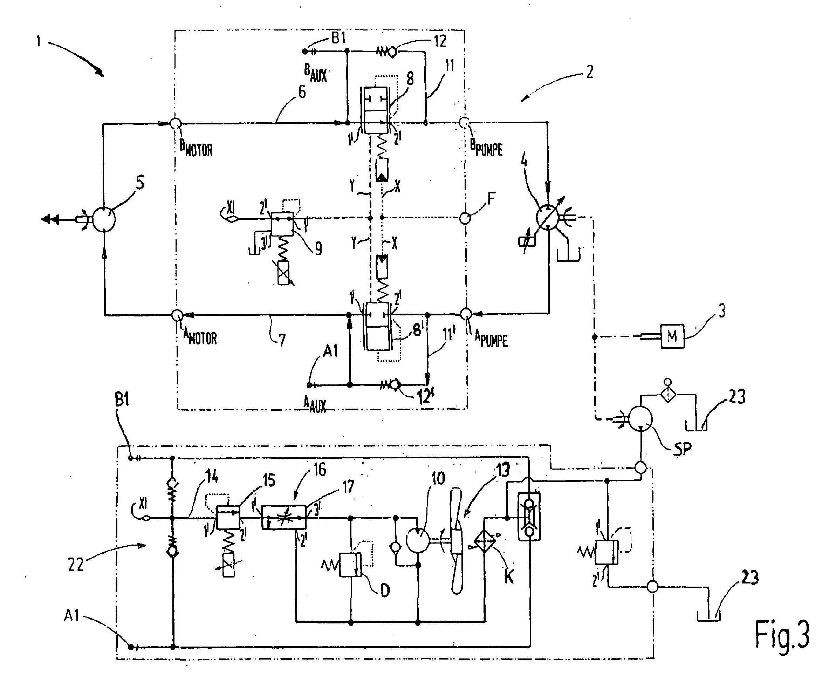

In der Fig. 3 ist der hydraulische Kreislauf 2 in Fig. 2 in einer Normalbetriebsphase gezeigt. Hierbei wird Druckmittel von der Hydropumpe 4 kommend über die zweite Arbeitsleitung 7 bei gesperrter Schaltstellung des zweiten Ventils 8' über dessen Bypassleitung 11' zu dem Hydromotor 5 gepumpt. Druckmittel wird dabei über die erste Arbeitsleitung 6 durch das in geöffneter Schaltstellung befindliche Ventil 8 zu der Hydropumpe 4 rückgeführt.

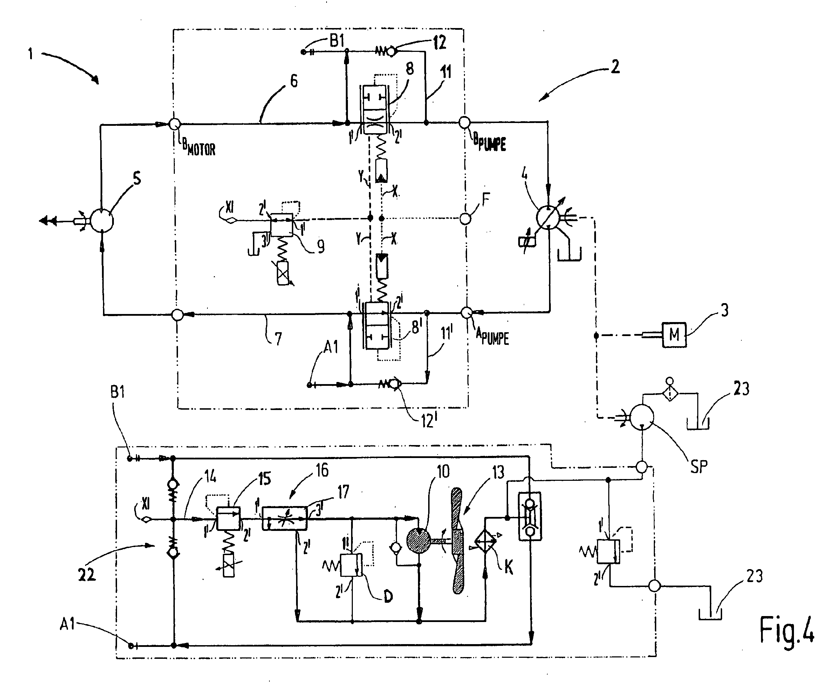

In der Fig. 4 ist der hydraulische Kreislauf 2 in Fig. 2 in einer umgekehrten Betriebsweise wie in Fig. 3 gezeigt. Es ist ein Schiebebetrieb ohne Last auf den Hydromotor 5 dargestellt, wobei der Hydromotor 5 Druckmittel fördert. Das erste Ventil 8 in der ersten Arbeitsleitung 6 ist in einem teilweise geschlossenen Zustand, das zweite Ventil 8' in einer geöffneten Schaltstellung. Druckmittel wird über die zweite Arbeitsleitung 7 drucklos zu dem Hydromotor 5 gefördert und unter hohem Druck in der ersten Arbeitsleitung 6 von dem Hydromotor 5 zu dem ersten Ventil 8 gefördert. In dessen Bypassleitung 11 ergibt sich ein Rückanstieg hin zu dem Abzweig A1, so dass bei der gesperrten Schaltstellung des Rückschlagventils 12 Druckmittel zu dem Verbraucher 10 gelenkt und die Hydropumpe 5 entlastet wird.

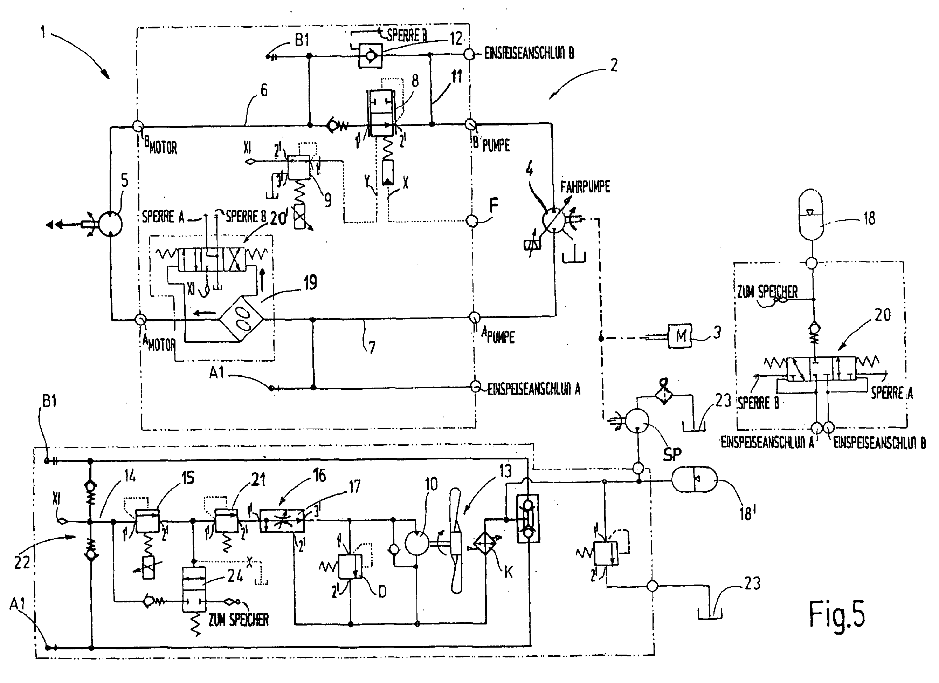

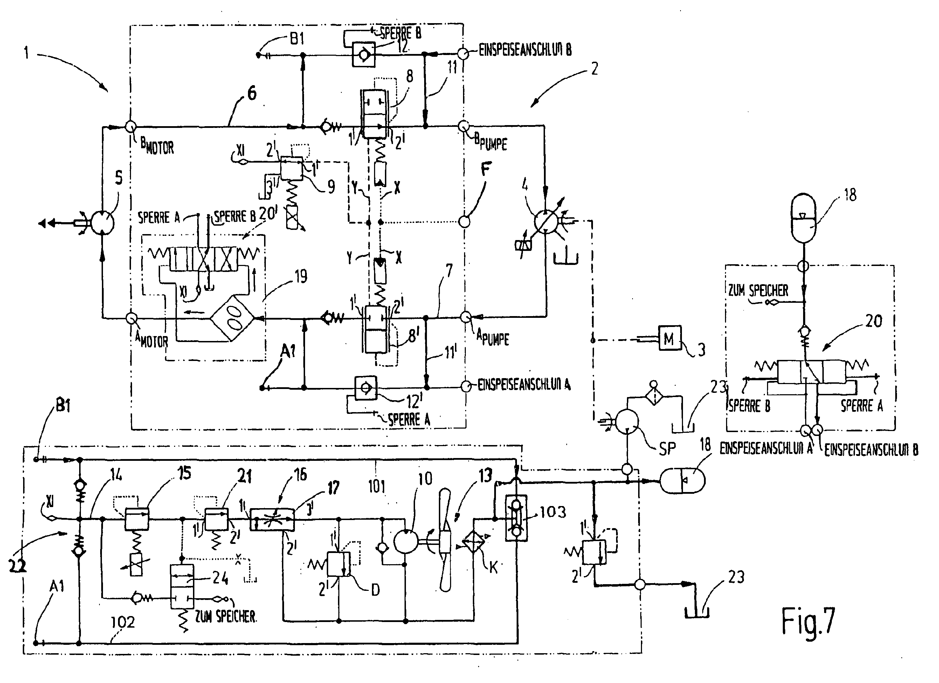

In den Fig. 5 bis 8 sind weitere Ausführungsbeispiel eines hydrostatischen Antriebs 1 gezeigt, wobei ein Flussrichtungsindikator 19 in die zweite Arbeitsleitung 7 geschaltet ist. Der Flussrichtungsindikator 19 steuert die Schaltstellung eines hydraulisch vorgesteuerten Schaltventils 20 an, das als 3/3-Wegeventil mit Federzentrierung in einer neutralen gesperrten Position gezeigt ist. Das Rückschlagventil oberhalb des Hauptsteuerventils 20 steuert dabei die Druckmittelabfuhr in einen Druckmittelspeicher 18 als Hochdruckspeicher für Fluid mit an, wobei eine Rückspeisung nicht vorgesehen ist. Ein weiterer Hydrospeicher 18' ist als Niederdruckspeicher eingesetzt (Fig.5). Ferner steuert das 3/3-Wegeventil den Fluidfluss von dem Druckspeicher 18 in den hydraulischen Kreislauf 2 zurück, im Sinne einer Anfahrhilfe oder Entlastung für den Fahrmotor oder den Hydromotor 5 (vgl. hierzu auch Fig. 7). Neben dem Hauptsteuerventil 20 ist ein Vorsteuerventil 20' vorgesehen, das mit Hauptsteuerventil insbesondere über die Sperren A,B zusammenwirkt.

Wie die Fig. 5 ferner zeigt, kann eine alternative Aufladungsphase des Druckmittelspeichers 18 auch dadurch bewirkt sein, dass die Aufladung des Druckmittelspeichers 18 von einem, dem Wechselventil 22 nachgelagerten Schaltventil 24, aus erfolgt. Das Schaltventil 24 kann hydraulisch vorgesteuert sein, indem Differenzdrücke der Versorgungsleitung 14 zwischen dem ersten Druckbegrenzungsventil 15 und dem zweiten Druckbegrenzungsventil 21 berücksichtigt werden. Würde etwa bei einem sehr großen Druckanstieg im Schiebebetrieb in der ersten Arbeitsleitung 6 der Druckmitteldruck stark ansteigen, so kann Druckmittel aus der Versorgungsleitung 14 in den Druckmittelspeicher 18 geführt werden. Das 3/2-Wegeventil zur Steuerung des Betriebs des Druckmittelspeichers 18 kann von Druckmitteldrücken, die an dem ersten Rückschlagventil 12 und an dem zweiten Rückschlagventil 12' abgegriffen sind, vorgesteuert sein.

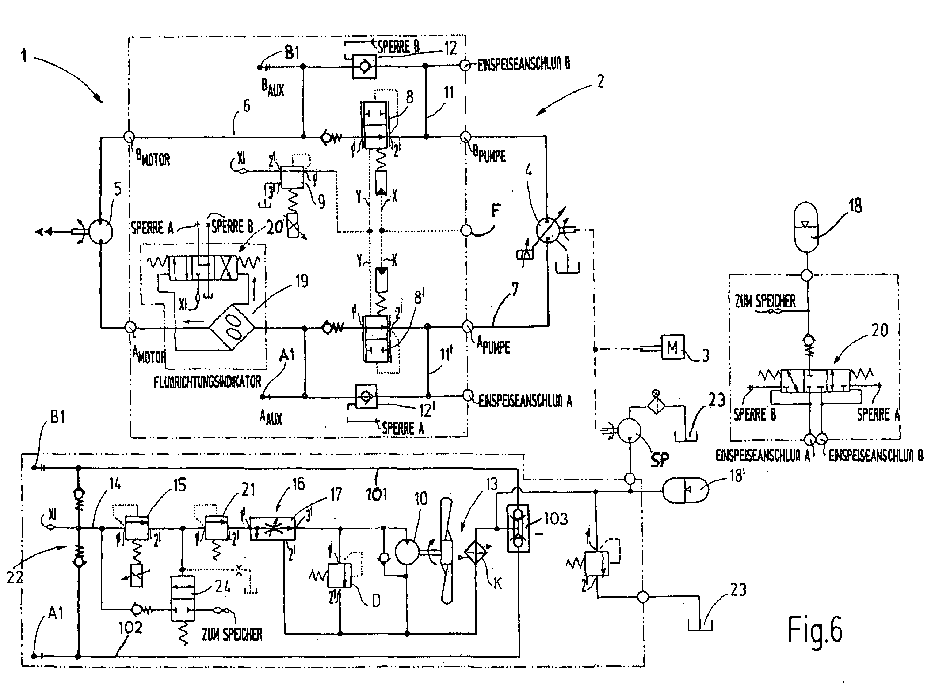

Fig. 6 zeigt hierzu ein weiteres Ausführungsbeispiel eines hydrostatischen Antriebs 1, bei dem im Gegensatz zu der in Fig. 5 gezeigten Lösung in beide Arbeitsleitungen 6, 7 ein Ventil 8, 8' eingeschaltet ist, dessen funktionale Einbindung grundsätzlich anhand der vorbeschriebenen Figuren aufgezeigt ist.

Fig. 7 zeigt den hydraulischen Kreislauf 2 in Fig. 6 in einer Einspeisephase aus dem Druckmittelspeicher 18 in einer normalen Betriebssituation, in der Druckmittel von der Hydropumpe 4 zu dem Hydromotor 5 über die zweite Arbeitsleitung 7 gefördert wird. Das zweite Ventil 8' ist in einer gesperrten Position, so dass Druckmittel über dessen Bypassleitung 11' über den Flussrichtungsindikator 19 zu dem Hydromotor 5 gefördert wird. An dem Abzweig B₁ kann Druckmittel zu der Versorgungsleitung 101 und dem Speicher 18' (Niederdruckspeicher) abgezweigt werden. Es lässt sich dadurch auch der Druckmittelspeicher 18 aufladen. Das erste Ventil 8 ist einer geöffneten Schaltstellung, in der Druckmittel in der ersten Arbeitsleitung 6 zurück von dem Hydromotor 5 zu der Hydropumpe 4 gefördert wird. Zwischen der Versorgungsleitung 101 und der weiteren Versorgungsleitung 102 ist ein Wechselventil 103 geschaltet.

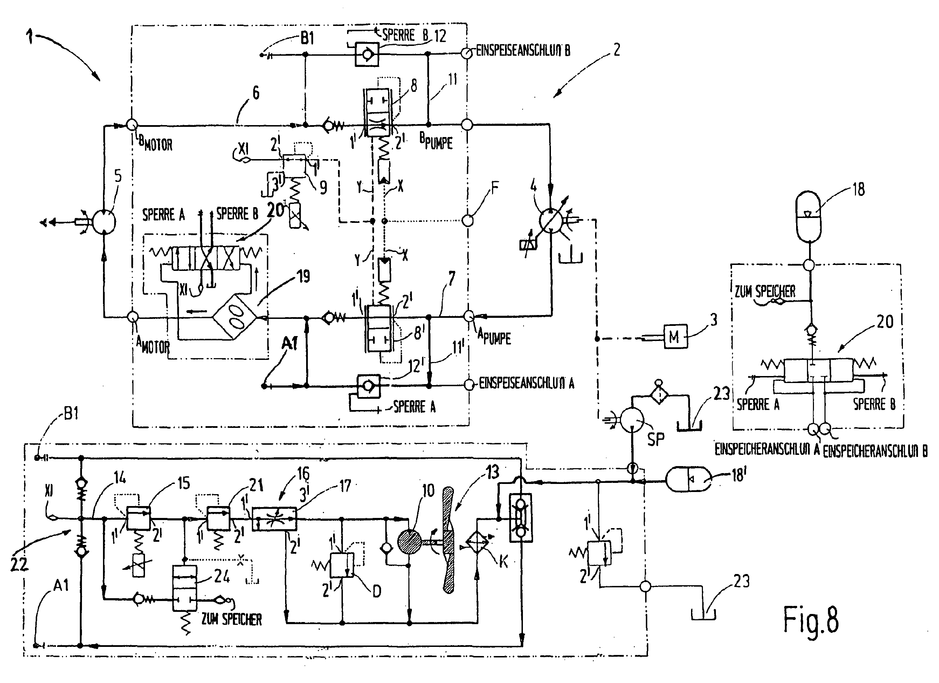

In der Fig. 8 ist derselbe hydraulische Kreislauf, wie in Fig. 7 in einer Betriebsweise im Schiebebetrieb gezeigt, also unter Druckanstieg in der ersten Arbeitsleitung 6 aufgrund von Beschleunigungen des Fahrmotors und des Hydromotors 5, beispielsweise bei einer Talfahrt des Fahrzeugs.

Das erste Ventil 8 in der Rücklaufleitung oder ersten Arbeitsleitung 6 ist in einer teilweise gesperrten Position, so dass durch den Druckanstieg vor dem Ventil 8 und aufgrund der gesperrten Position des Rückschlagventils 12, Druckmittel von dem Abzweig B1 zu der Versorgungsleitung 14 geführt ist. Das zweite Ventil 8' ist in einer gesperrten Schaltstellung, d. h. Druckmittel kann drucklos über 12' in der zweiten Arbeitsleitung 7 von der Hydropumpe 4 zu dem Hydromotor 5 gelangen.

## Patentansprüche

1. Hydrostatischer Antrieb mit einer geschlossenen Kreislaufführung (2), welcher eine verstellbare, von einer Verbrennungskraftmaschine (3) angetriebene Hydropumpe (4) und einen Hydromotor (5) sowie eine erste Arbeitsleitung (6) und eine zweite Arbeitsleitung (7) aufweist, wobei die erste und die zweite Arbeitsleitung (6, 7) jeweils die Hydropumpe (4) und den Hydromotor (5) miteinander verbinden wobei ein erstes hydraulisch vorgesteuertes Ventil (8) den Fluidstrom in der ersten Arbeitsleitung (6) regelt, die in einem Vorwärtsfahrbetrieb die Rücklaufleitung für Fluid von dem Hydromotor (5) zu der Hydropumpe (4) bildet, **dadurch gekennzeichnet, dass** die hydraulische Vorsteuerung des Ventils (8) durch ein, den Fluiddruck in der ersten Arbeitsleitung (6) erfassendes Druckregelventil (9) und in Abhängigkeit des Fluiddruckes in der ersten Arbeitsleitung (6) und in der zweiten Arbeitsleitung (7) erfolgt, und dass bei Überschreiten des Fluiddrucks in der ersten Arbeitsleitung (6) von einem in dem Druckregelventil (9) eingestellten Druck bei einem Bremsvorgang das Ventil (8) in eine Schaltstellung übergeht, in der der Fluidstrom an einen weiteren Verbraucher (10) geführt ist.

2. Hydrostatischer Antrieb nach Anspruch 1, **dadurch gekennzeichnet, dass** das erste Ventil (8) über eine Bypassleitung (11) in der ersten Arbeitsleitung (6) überbrückt ist, und dass die Bypassleitung (11) ein Rückschlagventil (12) aufweist, das sperrend auf den Fluidstrom bei einem Bremsvorgang wirkt und die Bypassleitung (11) mit dem weiteren Verbraucher (10) fluidführend verbunden ist.

3. Hydrostatischer Antrieb nach Anspruch 1 oder 2, **dadurch gekennzeichnet, dass** der weitere Verbraucher (10) ein hydraulischer Antrieb für ein Kühlgebläse (13) ist.

4. Hydrostatischer Antrieb nach einem der Ansprüche 1 bis 3, **dadurch gekennzeichnet, dass** der weitere Verbraucher (10) von einem Fluidstrom aus der ersten Arbeitsleitung (6) oder aus der zweiten Arbeitsleitung (7) betrieben ist.

5. Hydrostatischer Antrieb nach einem der Ansprüche 1 bis 4, **dadurch gekennzeichnet, dass** in einer Versorgungsleitung (14) für den weiteren Verbraucher (10) ein erstes Druckbegrenzungsventil (15) und ein Stromventil (16) angeordnet ist.

6. Hydrostatischer Antrieb nach Anspruch 5, **dadurch gekennzeichnet, dass** das Stromventil (16) ein 3-Wege-Stromregler (17) ist, der den Fluidstrom zwischen dem weiteren Verbraucher (10) und einem Kühlkreislauf (K) aufteilt.

7. Hydrostatischer Antrieb nach einem der Ansprüche 1 bis 6, **dadurch gekennzeichnet, dass** er einen Druckspeicher (18) umfasst, der in Abhängigkeit von Signalen von einem in der zweiten Arbeitsleitung (7) eingesetzten Flussrichtungsindikator (19) hydraulisch vorgesteuerten Schaltventil (20) aufladbar bzw. zuschaltbar ist.

8. Hydrostatischer Antrieb nach Anspruch 7, **dadurch gekennzeichnet, dass** der Druckspeicher (18) von Fluid aus der ersten Arbeitsleitung (6) oder aus der zweiten Arbeitsleitung (7) oder aus der Versorgungsleitung (14) für den weiteren Verbraucher (10) aufladbar ist, wobei das Hauptsteuerventil (20) die Aufgabe hat, in Abhängigkeit des Druckniveaus unter Berücksichtigung der Flußrichtung dem System Energie zuzuführen.

9. Hydrostatischer Antrieb nach Anspruch 8, **dadurch gekennzeichnet, dass** das Schaltventil (24) ein von einem Fluiddruck zwischen dem ersten Druckbegrenzungsventil (15) und einem diesem nachfolgenden zweiten Druckbegrenzungsventil (21) angesteuert ist.

10. Hydrostatischer Antrieb nach einem der Ansprüche 7 bis 9, **dadurch gekennzeichnet, dass** das den Aufladevorgang des Druckspeichers (18) regelnde Schaltventil (24) ein 2/2-Wegeventil ist, das ihn seiner Ruheposition sperrt.

11. Hydrostatischer Antrieb nach einem der Ansprüche 1 bis 10, **dadurch gekennzeichnet, dass** ein zweites hydraulisch vorgesteuertes Ventil (8') den Fluidstrom in der zweiten Arbeitsleitung (7) regelt, die im Vorwärtsfahrbetrieb die Zulaufleitung für Fluid von dem Hydromotor (5) zu der Hydropumpe (4) bildet und dass die hydraulische Vorsteuerung des zweiten Ventils (8') durch das den Fluiddruck in der zweiten Arbeitsleitung (7) erfassende Druckregelventil (9) und in Abhängigkeit des Fluiddruckes in der ersten Arbeitsleitung (6) und in der zweiten Arbeitsleitung (7) erfolgt, um einen bidirektionalen Betrieb zu verwirklichen.

12. Hydrostatischer Antrieb nach einem der Ansprüche 1 bis 11, **dadurch gekennzeichnet, dass** das erste und das zweite Ventil (8, 8') ein 2/2-Wegeventil ist.

13. Hydrostatischer Antrieb nach Anspruch 11 oder 12, **dadurch gekennzeichnet, dass** das zweite Ventil (8') mit einer Bypassleitung (11') in der zweiten Arbeitsleitung (7) überbrückt ist, wobei die Bypassleitung (11') ein Rückschlagventil (12') umfasst, das Öffnen im Vorwärtsfahrbetrieb wirkt und die Bypassleitung (11') fluidführend mit dem weiteren Verbraucher (10) verbindet.

14. Hydrostatischer Antrieb nach einem der Ansprüche 1 bis 13, **dadurch gekennzeichnet, dass** der Fluidstrom zu dem weiteren Verbraucher (10) und zu dem Kühlkreislauf (K) von jeweils einem Druckventil vorgesteuert ist.

## Claims

1. A hydrostatic drive having a closed circulation system (2) and which comprises an adjustable hydraulic pump (4) driven by an internal combustion engine (3) and a hydraulic motor (5), as well as a first working line (6) and a second working line (7), the first working line and the second working line (6, 7) each connecting the hydraulic pump (4) and the hydraulic motor (5) to one another, a first hydraulically pilot-controlled valve (8) regulating the fluid flow in the first working line (6) which, in a forward driving operation, forms the return line for fluid from the hydraulic motor (5) to the hydraulic pump (4), **characterised in that** the hydraulic pilot control of the valve (8) is effected by a pressure control valve (9) which detects the fluid pressure in the first working line (6) and depending on the fluid pressure in the first working line (6) and in the second working line (7), and that when a pressure set in the pressure control valve (9) exceeds the fluid pressure in the first working line (6), during a braking operation, the valve (8) switches to a position in which the fluid flow is conducted to a further consumer (10).

2. The hydrostatic drive according to Claim 1, **characterised in that** the first valve (8) is bridged by a bypass line (11) in the first working line (6), and that the bypass line (11) has a check valve (12) the effect of which is to block the fluid flow during a braking operation, and the bypass line (11) is connected to the additional consumer (10) such as to convey fluid.

3. The hydrostatic drive according to Claim 1 or 2, **characterised in that** the additional consumer (10) is a hydraulic drive for a cooling fan (13).

4. The hydrostatic drive according to any of Claims 1 to 3, **characterised in that** the additional consumer (10) is operated by a fluid flow from the first working line (6) or from the second working line (7).

5. The hydrostatic drive according to any of Claims 1 to 4, **characterised in that** a first pressure limitation valve (15) and a flow control valve (16) are arranged in a supply line (14) for the additional consumer (10).

6. The hydrostatic drive according to Claim 5, **characterised in that** the flow control valve (16) is a 3-way flow regulator (17) that divides the fluid flow between the additional consumer (10) and a cooling circuit (K).

7. The hydrostatic drive according to any of Claims 1 to 6, **characterised in that** it comprises a pressure accumulator (18) that can be charged or switched on by a hydraulically pilot-controlled shift valve (20) depending on signals from a flow direction indicator (19) inserted into the second working line (7).

8. The hydrostatic drive according to Claim 7, **characterised in that** the pressure accumulator (18) can be charged with fluid from the first working line (6) or from the second working line (7) or from the supply line (14) for the additional consumer (10), the purpose of the main control valve (20) being to deliver energy to the system depending on the pressure level in consideration of the flow direction.

9. The hydrostatic drive according to Claim 8, **characterised in that** the shift valve (24) is controlled by a fluid pressure between the first pressure limitation valve (15) and a second pressure limitation valve (21) following the latter.

10. The hydrostatic drive according to any of Claims 7 to 9, **characterised in that** the shift valve (24) regulating the charging operation of the pressure accumulator (18) is a 2/2-way valve that blocks it in its rest position.

11. The hydrostatic drive according to any of Claims 1 to 10, **characterised in that** a second hydraulically pilot-controlled valve (8') regulates the fluid flow in the second working line (7) which in a forward driving operation forms the feed line for fluid from the hydraulic motor (5) to the hydraulic pump (4) and that the hydraulic pilot control of the second valve (8') is effected by the pressure control valve (9) which detects the fluid pressure in the second working line (7) and depending on the fluid pressure in the first working line (6) and in the second working line (7) in order to realise bidirectional operation.

12. The hydrostatic drive according to any of Claims 1 to 11, **characterised in that** the first and the second valve (8, 8') are 2/2-way valves.

13. The hydrostatic drive according to Claim 11 or 12, **characterised in that** the second valve (8') is bridged by a bypass line (11') in the second working line (7), the bypass line (11') comprising a check valve (12') that brings about opening in a forward driving operation and connects the bypass line (11') to the additional consumer (10) such as to convey fluid.

14. The hydrostatic drive according to any of Claims 1 to 13, **characterised in that** the fluid flow to the additional consumer (10) and to the cooling circuit (K) is pilot-controlled by a respective pressure valve.

## Revendications

1. Entraînement hydrostatique comprenant un circuit (2) fermé, qui a une pompe (4) hydraulique réglable et entraînée par un moteur (3) à combustion interne, et un moteur (5) hydraulique, ainsi qu'une première ligne (6) de travail et une deuxième ligne (7) de travail, la première et la deuxième lignes (6, 7) de travail mettant en communication entre eux respectivement la pompe (4) hydraulique et le moteur (5) hydraulique, une première vanne (8) pilotée hydrauliquement réglant le courant de fluide dans la première ligne (6) de travail qui forme, dans un fonctionnement en marche avant, le conduit de retour du fluide du moteur (5) hydraulique à la pompe (4) hydraulique, **caractérisé en ce que** le pilotage hydraulique de la vanne (8) s'effectue par une soupape (9) de réglage de la pression, détectant la pression du fluide dans la première ligne (6) de travail, et en fonction de la pression du fluide dans la première ligne (6) de travail et dans la deuxième ligne (7) de travail et **en ce que**, si la pression du fluide dans la première ligne (6) de travail dépasse une pression établie par la soupape (9) de réglage de la pression lors d'une opération de freinage, la vanne (8) passe dans une position de commutation, dans laquelle le courant de fluide est conduit à un consommateur (10).

2. Entraînement hydrostatique suivant la revendication 1, **caractérisé en ce que** la première vanne (8) est court-circuitée par un conduit (11) de dérivation dans la première ligne (6) de travail et **en ce que** la ligne (11) de dérivation a un clapet (12) anti-retour qui agit en arrêtant le courant de fluide lors d'une opération de freinage et le conduit (11) de dérivation communique fluidiquement avec l'autre consommateur (10).

3. Entraînement hydrostatique suivant la revendication 1 ou 2, **caractérisé en ce que** l'autre consommateur (10) est un entraînement hydraulique pour une soufflante (13) de refroidissement.

4. Entraînement hydrostatique suivant l'une des revendications 1 à 3, **caractérisé en ce que** l'autre consommateur (10) est entraîné par un courant de fluide provenant du premier conduit (6) de travail ou du deuxième conduit (7) de travail.

5. Entraînement hydrostatique suivant l'une des revendications 1 à 4, **caractérisé en ce qu'**une première soupape (15) de limitation de la pression et une vanne (16) de courant sont montées dans le conduit (14) d'alimentation de l'autre consommateur (10).

6. Entraînement hydrostatique suivant la revendication 5, **caractérisé en ce que** la vanne (16) de courant est un régleur (17) de courant à trois voies, qui répartit le courant de fluide entre l'autre consommateur (10) et un circuit (K) de refroidissement.

7. Entraînement hydrostatique suivant l'une des revendications 1 à 6, **caractérisé en ce qu'**il comprend un accumulateur (18) de pression qui, en fonction de signaux, peut être chargé ou branché par une soupape (20) de commande pilotée hydrauliquement par un indicateur (19) de sens du flux inséré dans le deuxième conduit (7) de travail.

8. Entraînement hydrostatique suivant la revendication 7, **caractérisé en ce que** l'accumulateur (18) de pression peut être chargé par du fluide provenant du premier conduit (6) de travail ou du deuxième conduit (7) de travail ou du conduit (14) d'alimentation de l'autre consommateur (10), la vanne (20) de commande principale ayant pour tâche d'envoyer de l'énergie au système en fonction du niveau de pression en tenant compte du sens du flux.

9. Entraînement hydrostatique suivant la revendication 8, **caractérisé en ce que** la soupape (24) de commande est commandée par une pression de fluide entre la première soupape (15) de limitation de la pression et une deuxième soupape (21) de limitation de la pression faisant suite à celle-ci.

10. Entraînement hydrostatique suivant l'une des revendications 7 à 9, **caractérisé en ce que** la vanne (24) de commande réglant l'opération de charge de l'accumulateur (18) de pression est une vanne à 2/2 voies, qui ferme dans sa position de repos.

11. Entraînement hydrostatique suivant l'une des revendications 1 à 10, **caractérisé en ce qu'**une deuxième vanne (8') pilotée hydrauliquement règle le courant de fluide dans la deuxième ligne (7) de travail qui forme, dans le fonctionnement en marche avant, le conduit d'arrivée du fluide du moteur (5) hydraulique à la pompe (4) hydraulique et **en ce que** le pilotage hydraulique de la deuxième vanne (8') s'effectue par la soupape (9) de réglage de la pression, détectant la pression du fluide dans la deuxième ligne (7) de travail, et en fonction de la pression du fluide dans la première ligne (6) de travail et dans la deuxième ligne (7) de travail pour réaliser un fonctionnement bidirectionnel.

12. Entraînement hydrostatique suivant l'une des revendications 1 à 11, **caractérisé en ce que** la première et la deuxième vannes (8, 8') sont des vannes à 2/2 voies.

13. Entraînement hydrostatique suivant la revendication 11 ou 12, **caractérisé en ce que** la deuxième vanne (8') est court-circuitée par un conduit (11') de dérivation dans la deuxième ligne (7) de travail, la dérivation (11') comprenant un clapet (12') anti-retour qui agit en étant ouvert dans le fonctionnement en marche vers l'avant et le conduit (11') de dérivation communique fluidiquement avec l'autre consommateur (10).

14. Entraînement hydrostatique suivant l'une des revendications 1 à 13, **caractérisé en ce que** le courant de fluide allant à l'autre consommateur (10) et au circuit (K) de refroidissement est piloté par respectivement une soupape de pression.
